(19) Europäisches Patentamt
European Patent Office
Office européen des brevets

(11) Veröffentlichungsnummer: **0 357 934**
**A2**

# (12) EUROPÄISCHE PATENTANMELDUNG

(21) Anmeldenummer: **89113822.4**

(22) Anmeldetag: **27.07.89**

(51) Int. Cl.5: **C08J 9/10 , //C08F283/08, C08L51:08**

(30) Priorität: **06.09.88 DE 3830252**
**10.03.89 DE 3907761**

(43) Veröffentlichungstag der Anmeldung:
**14.03.90 Patentblatt 90/11**

(84) Benannte Vertragsstaaten:
**BE DE ES FR GB IT NL SE**

(71) Anmelder: **HÜLS AKTIENGESELLSCHAFT**
**Patentabteilung / PB 15 - Postfach 13 20**
**D-4370 Marl 1(DE)**

(72) Erfinder: **Speikamp, Hans-Dieter, Dr.**
**Birkenallee 17**
**D-4358 Haltern 6(DE)**

## (54) Schäumbares Polymerisat auf der Basis von Polyphenylenoxid und einer vinylaromatischen Verbindung, Verfahren zu dessen Herstellung und Verwendung desselben.

(57) Bisher werden die wärmeformbeständigen Schaumstoffe auf der Basis von Polyphenylenoxid und einer vinylaromatischen Verbindung in der Weise hergestellt, daß die vinylaromatische Verbindung in Gegenwart von Polyphenylenoxid polymerisiert wird. Das fertige Polymerblend wird dann granuliert, im Extruder mit dem Treibmittel nachbeladen und anschließend aufgeschäumt. Dieses Verfahren ist aufwendig und kostenintensiv.

Nach dem erfindungsgemäßen Verfahren wird das schäumbare Polymerisat in einem einstufigen Verfahren hergestellt, d. h. die Beladung mit dem Treibmittel erfolgt bereits während der Polymerisation. Außerdem werden durch eine spezielle Zugabereihenfolge der Edukte Reaktorwandanbackungen verhindert, was zu einer Ausbeutesteigerung führt. Anschließend wird aufgeschäumt.

Die aus den schäumbaren Polymerisaten hergestellten Schaumstoffe werden bevorzugt zur Wärmeisolation eingesetzt.

EP 0 357 934 A2

## Schäumbares Polymerisat auf der Basis von Polyphenylenoxid und einer vinylaromatischen Verbindung, Verfahren zu dessen Herstellung und Verwendung desselben

Schaumstoffe nur auf der Basis von Polystyrol sind bekannt; sie haben aber den Nachteil einer nur begrenzten Wärmeformbeständigkeit. Sie sind in Bereichen, in denen mit kurzzeitigen oder längeren Temperaturbelastungen über 90 °C gerechnet werden muß, nicht einsetzbar. Hierzu zählt insbesondere der Sektor der Wärmeisolation (Dampfleitungen usw.).

Es gibt eine Reihe von Versuchen, die Wärmeformbeständigkeit des reinen Polystyrols durch Zusatz von Polyphenylenoxid zu erhöhen. So sind einige Suspensionspolymerisationsverfahren bekannt, bei denen Styrol in Gegenwart von Polyphenylenoxid polymerisiert wird (DE-AS 19 39 033, US-PS 3 384 682). Das fertige Polymerblend wird im Extruder unter erhöhtem Druck und erhöhter Temperatur mit einem Treibmittel vermischt und anschließend durch Entspannung aufgeschäumt.

Beschrieben wird der Extrusionsschaum z. B. in der US-PS 2 757 558.

Die Herstellung eines Extrusionsschaumstoffs ist äußerst kostenintensiv, da zunächst das Polymerblend hergestellt und granuliert werden muß. Erst dann kann die Beladung mit dem Treibmittel und die Schaumextrusion erfolgen. Für das Aufschäumen ist es wichtig, daß die treibmittelhaltigen Polymerperlen eine möglichst runde Gestalt haben. Ebenfalls wichtig ist die Perlengröße. So werden feinere Fraktionen zu Verpackungsmaterial verarbeitet, während grobe Perlen für die Herstellung von Isolierplatten eingesetzt werden.

Aufgabe der Erfindung war es nun, treibmittelhaltige Polymerperlen auf Basis von Polyphenylenoxid und vinylaromatischen Verbindungen mit definierter Teilchengröße und -gestalt in einem einstufigen Verfahren herzustellen, d. h. ohne Treibmittelnachbeladung des Polymerisats im Extruder.

Diese Aufgabe wurde überraschenderweise dadurch gelöst, daß man vinylaromatische Verbindungen in Gegenwart von Polyphenylenoxid in Suspension bis zum vollständigen Umsatz polymerisiert und das sich bildende Polymerisat gleichzeitig vor, während oder nach der Polymerisation mit einem Treibmittel belädt. Die Suspensionspolymerisation von Styrol in Gegenwart von Polyphenylenoxid ist ein schwierig zu beherrschendes Verfahren, da sich das anwesende Polyphenylenoxid auf die Polymerisation der vinylaromatischen Verbindung und die Stabilität der Suspension auswirkt. Somit war keineswegs vorhersehbar, daß das Polymerblend aus genau definierten Teilchen bestehen würde mit Korngrößen zwischen 0,5 bis 2,5 mm und einer streng kugelförmigen Gestalt. Ein weiterer Vorteil der erfindungsgemäßen Polymerisate sind die niedrigen Schüttdichten des daraus hergestellten Schaumstoffs von < 100 g/l. Die Aufarbeitung des treibmittelhaltigen Suspensionspolymerisats erfolgt entsprechend der bekannten Polystyrol- Technologie in einem Zweistufenprozeß, bestehen aus Vorschäumen und Ausschäumen mit Wasserdampf zu Formteilen, (vgl. H. L. v. Cube, K. E. Pohl, "Die Technologie des schäumbaren Polystyrols", Hüthig Verlag 1965).

Zur Herstellung des erfindungsgemäßen schäumbaren Polymerisats werden vinylaromatische Verbindungen der allgemeinen Formel

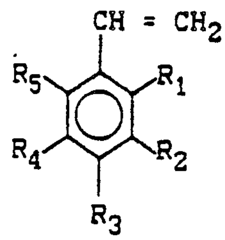

I,

in der $R_1$, $R_2$, $R_3$, $R_4$ und $R_5$ unabhängig voneinander ein Wasserstoffatom, ein Halogenatom, eine Alkyl-, eine Amino-, eine Cyano-, eine Nitro-, eine Hydroxy- oder eine Carboxygruppe bedeuten können, in Gegenwart eines Polyphenylenoxids der allgemeinen Formel

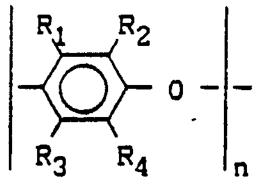

in der $R_1$, $R_2$, $R_3$ und $R_4$ gleich oder verschieden sind und Wasserstoff, Halogen, Alkyl-, Allyl-, Phenyl- oder Benzylgruppen sein können und n für eine beliebige ganze Zahl steht, in Suspension polymerisiert.

Vorzugsweise werden als vinylaromatische Verbindungen Styrol, p-Methylstyrol und $\alpha$-Methylstyrol verwendet.

Es werden Polyphenylenoxide mit Molmassen zwischen 5 000 und 80 000 g/mol, vorzugsweise 8 000 bis 60 000 g/mol, eingesetzt, welche eine möglichst niedrige phenolische OH-Endgruppenkonzentration aufweisen, wie z. B. endgruppenverkappte oder auch hochmolekulare Polyphenylenoxide. Die Verkappung kann auf die de Fachmann bekannte und in der Literatur beschriebene Art erfolgen [s. a. J. Poly. Sci. Polym. Chem. Ed. 24, 365 (1986)].

Bekannte Verkappungsreaktionen stellen z. B. die Umsetzungen mit Acetanhydrid, Epikote-Harzen oder p-Chlormethylstyrolderivaten dar. Die Art der Verkappung ist hierbei nicht problematisch.

Die Konzentration der Endgruppen liegt vorzugsweise unter 0,19 Gewichtsprozent, bezogen auf das Polyphenylenoxid.

Der Polyphenylenoxidanteil kann im Gesamtpolymerisat zwischen 5 und 95 Gewichtsprozent liegen. Die besten Ergebnisse werden erzielt, wenn der Anteil des Polyphenylenoxids zwischen 5 und 50 Gewichsprozent liegt.

Die Polymerisatteilchen können Zusätze enthalten, die den daraus hergestellten Schaumstoffen bestimmte Eigenschaften verleihen. Genannt seien beispielsweise Flammschutzmittel auf Basis von organischen Brom-oder Chlorverbindungen, wie Trisdibrompropylphosphat, Hexabromcyclododecan oder Chlorparaffine, sowie Synergisten für Flammschutzmittel, wie Dicumylperoxid und andere hochzersetzliche organische Peroxide.

Ferner zu nennen sind andere Zuschlagstoffe wie Antistatika, Stabilisatoren, Füllstoffe und beim Vorschäumen antiverklebend wirkende Stoffe. Die Zusatzstoffe können je nach der beabsichtigen Wirkung in den Teilchen homogen verteilt oder als Oberflächenbeschichtung vorliegen.

Die erfindungsgemäßen schäumbaren Polymerisate werden durch Polymerisation in Suspension hergestellt. Im folgenden werden die Polymerisationsbedingungen erläutert.

Verwendet werden organische Radikalinitiatoren, die gewöhnlich auch für eine Styrolpolymerisation eingesetzt werden. Hierzu zählen z. B. Benzoylperoxid, tert.-Butylperbenzoat und Azobisisobutyronitril. Besonders geeignet sind Kombinationen zweier oder mehrerer Initiatoren, die sich bei unterschiedlichen Temperaturen zersetzen. In dem Falle, wo die Kombination eines sich bei niedriger Temperatur zersetzenden Initiators mit einem bei hoher Temperatur sich zersetzenden Initiators verwendet wird, bewirkt man die Polymerisation anfangs bei Temperaturen kleiner/gleich 90 °C, und nachdem ein bestimmtes Ausmaß an Polymerisationsausbeute erreicht worden ist, erhöht man die Temperatur des Systems, um die Polymerisation bei einer hohen Temperatur im wesentlichen vollständig durchzuführen. Der Initiator oder die Initiator-Kombination wird in einer Menge von 0,01 bis 10 Gewichtsprozent verwendet.

Die verwendete Wassermenge muß so bemessen sein, daß der Suspensionszustand des Reaktionssystems stets gewährleistet ist. Im allgemeinen wird das Wasser in einer Menge von mindestens 0,7 Gewichtsteilen, vorzugsweise 1 bis 10 Gewichtsteilen, je Gewichtsteil des Gemisches aus Polyphenylenoxid und vinylaromatischer Verbindung eingesetzt.

Die wäßrige Suspension enthält Suspensionshilfsmittel, wie z. B. teilverseifte Polyvinylalkohole, Celluloseether oder anorganische Pickering-Emulgatoren. Die Menge des Suspensionshilfsmittels beträgt gewöhnlich 0,0001 bis 3 Gewichtsprozent, vorzugsweise 0,001 bis 1,0 Gewichtsprozent, bezogen auf das Gewicht des verwendeten Wassers.

Die Treibmittelbeladung erfolgt bei einem Druck von 4 bis 10 bar. Das Treibmittel ist in der Regel ein niedrigsiedender Kohlenwasserstoff mit 4 bis 8 C-Atomen, vorzugsweise Butan oder Pentan. Aber auch andere niedrigsiedende Verbindungen, wie z. B. Petrolether oder auch Chlorkohlenwasserstoffe sind als Treibmittel einsetzbar.

Das Verfahren kann in der Weise durchgeführt werden, daß zunächst das Suspendierhilfsmittel in Wasser gelöst wird und anschließend das Poly phenylenoxid und Styrol zugegeben werden. Die Polymerisation wird dann durch die Zugabe eines Initiators ausgelöst (Beispiel 1).

Es kann aber bei einer anderen Verfahrensvarianten erst das Polyphenylenoxid im Styrol gelöst werden. Zu dieser viskosen Lösung werden dann nacheinander Initiator, Wasser und Suspendierhilfsmittel gegeben, und anschließend wird auspolymerisiert (Beispiel 2).

Diese Verfahren besitzen aber noch einige Nachteile. So kommt es während der Polymerisation zu unerwünschten Wandanbackungen des Reaktors. Das kann zu Ausbeuteverlusten bis zu 30 % führen, außerdem wird dadurch eine aufwendige Reinigung des Reaktors nötig.

Weiter kann die Bildung gröberer Polymerisatteilchen mit hohen Innenwassergehalten noch nicht unterdrückt werden.

Es wurde nun gefunden, daß durch die bestimmte Zugabereihenfolge der Edukte ein Anbacken an die Reaktorwand verhindert werden kann. Das weiteren bietet diese weitere Verfahrensvariante erweiterte Möglichkeiten zur Teilchengrößensteuerung (z. B. über die Rührerdrehzahl und Dispergiertemperatur).

Diese Verfahrensweise war für den Fachmann nicht naheliegend, vielmehr mußte bei Anwendung dieser Zugabereihenfolge mit einem Verklumpen eines Teils des Reaktorinhalts gerechnet werden. Das Verfahren kann sogar bei einem hohen Polyphenylenoxidanteil durchgeführt werden, ohne daß es zu Anbackungen über das normale Maß hinaus kommt.

Nach der gefundenen Verfahrensweise wird die vinylaromatische Verbindung zunächst in Wasser dispergiert. Die verwendete Wassermenge beträgt mindestens 40 Gewichtsteile, vorzugsweise 50 bis 70 Gewichtsteile, je Gewichtsteil des Gemisches aus Polyphenylenoxid und vinylaromatischer Verbindung.

Anschließend wird auf 25 bis 80 °C, vorzugsweise 50 bis 80 °C, aufgeheizt. Nach dem Erreichen der eingestellten Temperatur wird die gewünschte Menge Polyphenylenoxid als Pulver (800 µm) so schnell zugegeben, daß es zu keiner Klumpenbildung kommt. Dies wird erreicht, wenn der Polyphenylenoxid-Anteil 40 % nicht überschreitet. Danach wird das Suspensionshilfsmittel zugegeben.

Zum Schluß erfolgt die Zugabe des monomerlöslichen Initiatorgemisches (Beispiel 3).

Die Aufschäumung des Polymerisats erfolgt nach der bekannten Technologie (s. o.).

## Beispiel 1

In einem verschlossenen 40-l-Rührdruckkessel werden 64,3 Teile Wasser vorgelegt und 0,08 Teile eines Suspendierhilfsmittels, vorzugsweise teilverseifter Polyvinylalkohol, darin gelöst. Dazu gibt man 4,8 Teile Polyphenylenoxid und 27,3 Teile Styrol, das 0,45 Teile Benzoylperoxid und 0,15 Teile tert.-Butylperbenzoat gelöst enthält. Die Reaktionsmischung wird auf 90 °C aufgeheizt und 4 Stunden bei dieser Temperatur gerührt. Während des anschließenden Aufheizens auf 110 °C werden 2,9 Teile Pentan bei einem Druck von 6 bar zugegeben. Nach weiteren 5 Stunden wird das Suspensionspolymerisat abgesiebt und getrocknet. Der Pentangehalt der getrockneten Perlen liegt bei 6 bis 7 %. Daraus resultiert beim Vorschäumen mit Wasserdampf ein Schüttgewicht von 40 g/l. Die Wärmeformbeständigkeit des Schaumes liegt bei 116 °C.

| Siebanalyse des Suspensionspolymerisates: | | | | | | | |
|---|---|---|---|---|---|---|---|
| Sieb (mm) | >1,0 | >0,9 | >0,8 | >0,63 | > 0,5 | > 0,4 | < 0,4 |
| Anteil (%) | 0.7 | 0,5 | 0,7 | 6,6 | 30,8 | 32,8 | 27,9 |

## Beispiel 2

In einem verschlossenen 40-l-Rührkessel werden 8,27 Teile PPE in 23,2 Teilen Styrol bei 80 °C unter Rühren gelöst. Nach Zugabe von 0,46 Teilen BPO, gelöst in 1,65 Teilen Styrol, wird die wäßrige Phase, bestehend aus 66,18 Teilen Wasser und 0,12 Teilen Hydroxyethylcellulose, zugefahren und 4 Stunden bei 90 °C polymerisiert. Während des anschließenden Aufheizens auf 110 °C werden 2,9 Teile Pentan bei einem Druck von 6 bar zugegeben. Nach weiteren 5 Stunden wird das Suspen sionspolymerisat abgesiebt und getrocknet. Der Pentangehalt der getrockneten Perlen liegt bei 6 %. Beim Vorschäumen mit Wasserdampf resultiert daraus ein Schüttgewicht von 40 g/l. Die Wärmeformbeständigkeit des Schaumes liegt bei 125 °C.

| Sieb (mm) | >2,5 | > 2,0 | > 1,6 | > 1,25 | >1,0 | >0,9 | >0,8 | >0,63 | >0,5 | <0,5 |
|---|---|---|---|---|---|---|---|---|---|---|
| Anteil (%) | 3,5 | 22,8 | 23,2 | 23,1 | 5,7 | 3,0 | 1,9 | 4,2 | 4,0 | 8,6 |

Beispiel 3

In einem 150-l-Reaktor werden unter Rühren 47,8 Teile Wasser und 30,5 Teile Styrol vorgelegt und auf 70 °C aufgeheizt. In dieser Emulsion werden 16,4 Teile Polyphenylenoxidpulver gelöst. Die Stabilisierung der Suspension erfolgt anschließend mit 0,19 Teilen Hydroxyethylcellulose (gelöst in wenig Wasser). Mit 0,6 Teilen eines Initiatorgemisches, bestehend aus 0,38 Teilen Benzoylperoxid und 0,13 Teilen tert.-Butylperbenzoat, wird die Reaktion bei 90 °C gestartet.

Nach 4 Stunden Polymerisation bei 90 °C wird die Reaktionsmischung innerhalb 1 Stunde auf 110 °C aufgeheizt, und gleichzeitig werden 4,5 Teile Pentan bei einem $N_2$-Druck von 6 bar zudosiert. Nach weiteren 5 Stunden Reaktionszeit wird das Suspensionspolymerisat abgesiebt und getrocknet. Der mittlere Teilchendurchmesser beträgt 1,36 mm.

Die Ausbeuteverluste durch Anbackungen liegen bei den Beispielen 1 und 2 zwischen 15 und 20 %. In Beispiel 3 wird unter Einhaltung einer bestimmten Zugabereihenfolge ein Anbacken des Reaktorinhalts an den Wänden praktisch verhindert.

## Ansprüche

1. Schäumbares Polymerisat auf der Basis von Polyphenylenoxid und einer vinylaromatischen Verbindung, hergestellt durch Suspensionspolymerisation der vinylaromatischen Verbindung in Gegenwart von Polyphenylenoxid und einem Suspensionshilfsmittel bei gleichzeitiger Treibmittel-Beladung des Polymerisats, wobei die dabei entstehenden Polymerisatteilchen eine genau definierte Größe und Gestalt haben.

2. Verfahren zur Herstellung eines schäumbaren Polymerisates auf der Basis von Polyphenylenoxid und vinylaromatischer Verbindung genau definierter Teilchengröße und -gestalt,
dadurch gekennzeichnet,
daß die vinylaromatische Verbindung in Gegenwart eines Polyphenylenoxids in Suspension unter Verwendung eines Suspensionshilfsmittels polymerisiert wird, wobei das Polymerisat gleichzeitig mit einem Treibmittel beladen wird.

3. Verfahren zur Herstellung eines schäumbaren Polymerisates auf der Basis von Polyphenylenoxid und vinylaromatischer Verbindung genau definierter Teilchengröße und -gestalt,
dadurch gekennzeichnet,
daß die vinylaromatische Verbindung zunächst in Wasser dispergiert und auf 25 bis 80 °C aufgeheizt, dann das Polyphenylenoxid hinzugegeben und erst nach Bildung einer homogenen Dispersion das Suspensionshilfsmittel beigfügt und anschließend durch Initiatorzugabe ohne übermäßige Reaktorwandanbackungen oder Verklumpungen polymerisiert wird, unter gleichzeitiger Beladung des Polymerisates mit einem Treibmittel.

4. Verfahren nach den Ansprüchen 2 und 3,
dadurch gekennzeichnet,
daß das Polyphenylenoxid Molmassen zwischen 5 000 und 80 000, vorzugsweise 8 000 bis 40 000 g/mol aufweist und die Konzentration der phenolischen OH-Endgruppen weniger als 0,19 Gewichtsprozent, bezogen auf das Polyphenylenoxid, beträgt.

5. Verfahren nach den Ansprüchen 2 bis 4,
dadurch gekennzeichnet,
daß das Treibmittel ein niedrigsiedender aliphatischer Kohlenwasserstoff mit 4 bis 8 C-Atomen, vorzugsweise Butan oder Pentan, ist.

6. Verfahren nach den Ansprüchen 2 bis 5,
dadurch gekennzeichnet,
daß das Treibmittel vor, während oder nach der Polymerisation zudosiert wird.

7. Verfahren nach Anspruch 2,
dadurch gekennzeichnet,
daß man als Suspensionshilfsmittel teilverseifte Polyvinylalkohole, Celluloseether oder anorganische

Pickering-Emulgatoren einsetzt.

8. Verwendung des schäumbaren Polymerisates nach Anspruch 1 bzw. erhalten nach den Ansprüchen 2 bis 6 als wärmeformbeständige Schaumstoffe.